Europäisches Patentamt

European Patent Office

Office européen des brevets

(19)

(11) Publication number: **0 080 789**
A1

(12) **EUROPEAN PATENT APPLICATION**

(21) Application number: **82303919.3**

(22) Date of filing: **23.07.82**

(51) Int. Cl.³: **G 01 M 7/00**
G 01 M 3/24, G 01 N 29/00
G 10 K 11/36

(30) Priority: **16.11.81 US 321499**

(43) Date of publication of application:
**08.06.83 Bulletin 83/23**

(84) Designated Contracting States:
**BE DE FR GB IT LU NL SE**

(71) Applicant: **Becton, Dickinson and Company**
**Mack Centre Drive**
**Paramus New Jersey 07652(US)**

(72) Inventor: **Tiede, David A.**
**9038 La Crescenta**
**Fountain Valley California 92708(US)**

(74) Representative: **Ruffles, Graham Keith et al,**
**MARKS & CLERK 57-60 Lincoln's Inn Fields**
**London WC2A 3LS(GB)**

(54) Surface wave acoustic emission sensor.

(57) A wedge mounted acoustic emission sensor provided for continuously monitoring the stability of structural elements, such as bridges or buildings, by sensing the surface wave acoustic emissions in those structures, while rejecting acoustic emissions from sources outside the region of interest. This is achieved by configuring the wedge (10) so that the top surface (52) thereof is angled within a specific range relative to the bottom engaging surface thereof which engages the surface of the structure being monitored, and by mounting the sensing element (20) on the top surface of the wedge to be perpendicular to the refracted sound wave being sensed. In addition, the front edge (22) of the sensing element is arranged to be fixed at the point on the top surface of the wedge where a straight line (24) perpendicular with the top surface, and drawn from the angle (40) of the wedge opposite the top surface, passes through the top surface. This line denotes the general front line margin of the refracted surface wave of the structure being monitored. The arrangement provides for an automatic filtering with resulting very directional sound waves.

FIG.1

## SURFACE WAVE ACOUSTIC EMISSION SENSOR

BACKGROUND AND STATEMENT OF THE INVENTION

Generally speaking, this invention relates to monitoring the acoustic emissions from stresses in structures in order to determine defects which may arise in such structures over a period of time, so as to signal those people monitoring such structures to investigate where the defect is located which is emitting a stress wave indicating a serious and growing fault in the structure. More particularly, this invention relates to a wedge mounted acoustic emission sensor for monitoring the surface stress waves in structures, such as bridges, and monitoring them continuously to indicate growing faults in the structures which might indicate failure, so as to correct the condition long prior to such failures.

It will be appreciated, that in large structures such as bridges or buildings, a great many noises are produced continuously. In monitoring for stress waves emitted because of a growing defect in the structure, the measurement or the monitoring process must be such that unrelated noises are not read or picked up along with the noise of interest. Thus, it becomes important to arrange an acoustic emission sensor which will blank out the unrelated noises and pick up the noise of interest, and monitor it for sensing and indicating a problem when it arises. The technique is a passive technique, and care must be taken to separate the emissions of interest, as mentioned above, and it is to this specific aspect of acoustic emission sensing, that this invention is directed.

It is difficult to discriminate against extraneous noise if only a small number of widely spaced transducers are used to detect and locate emission sources on a large complex structure. Therefore, the approach is to concentrate on regions of interest, and to exclude stress waves from sources outside the region. In the case of a bridge structure, for example, the electroslag and butt welds on the bottom flanges of the main girders of the bridge may be selected as the region of interest wherein the transducers are mounted for sensing and continuous monitoring.

Most of the acoustic emission energy transmitted in a bridge structure, for example, when measuring the weld geometry of the bridge, is transmitted in waves which travel on the surface of the structure. Acoustic emission transducers are usually sensitive only to the particle motions perpendicular to the surface. Thus, it is possible to increase the sensitivity of such a transducer to surface waves by placing an appropriate wedge between the structure and the transducers. By doing so, the waves of interest are redirected to the sensor. It is this approach, which is used with the invention here for mounting transducer sensors. Besides increased sensitivity to surface waves, the wedge also makes the transducers' sensitivity response unidirectional. Thus, a transducer placed at one end of the weld tends to respond only to the stress waves which originated along the weld. It follows that proper choice of the wedge material and the frequency generated, will allow a single transducer, in accordance with this invention, to monitor along a line with excellent rejection of

stress waves not originating on that line, and to provide a precise response to the wave pattern propagated.

Therefore, there is provided, in accordance with this invention, an arrangement for sensing the surface waves along a line at a weld in a structure or a bridge, by mounting a sensor on a wedge wherein the wedge top surface is angled relative to the bottom engaging surface of the wedge within the range of between about 40.41° and 44.25°, depending upon the kind of material utilized to mount the wedge to the surface substrate being monitored. For example, if a slip mounting is used, preferably, the angle will be about 40.41° while if a welded mounting is utilized, then the angle will be about 44.25°.

While it is within the purview of this invention that the wedge mounting may be comprised of a variety of different materials, such as a variety of plastics, for example, preferably, in accordance with this invention, brass is utilized since it has a density similar to steel which is the substrate being monitored in this instance.

Aside from the angle of the wedge, as discussed above, a second feature of this invention includes the value of the length of the sensor mounted on the top surface of the wedge. The length of the sensor varies inversely, in accordance with this invention, with the frequency of the stress waves being monitored. Thus, for example, if the frequency being monitored is 100kHz, and the mounting of the wedge on the substrate is a slip mounting, the length of the sensor will be about 50.96mm. If the mounting is a welded mounting, on the other hand, the length will be 77.53mm. On the other hand, if the frequency is 1MHZ then, the length of the sensor for a slip mounting will be about 5.10mm and for a welded mounting, the length will be about 7.75mm.

In mounting the wedge to the substrate being monitored, a variety of materials may be utilized. If a slip mounting is used, a number of materials may be used including gels, glycerine, a silicon grease, or any conventional petroleum jelly. Preferably, however, ULTRAGEL II an ultrasonic couplant manufactured by Echo Laboratories, Louistown, Pennsylvania is used. If, on the other hand, a weld mounting is used, a variety of different pressure sensitive adhesives may be utilized including cyanoacrylic pressure sensitive adhesives or room temperature volcanizing compounds. The cyanoacrylic pressure sensitive adhesives are preferable, because it is important, in accordance herewith, that the bonding material be in a form as thin as possible between the weld bottom surface and the top surface of the substrate being monitored. Representative products are SUPERDROP 3, a product of Hysol Division, Dexter Corporation, Pittsburg, California, or Eastman 910, a product of Eastman Kodak Company, Rochester, New York.

A third aspect of the invention, is that the transducer sensor be mounted on the top surface of the wedge in a specific place. That is, the front edge of the sensor should be arranged to be on a line passing through said top surface, and which line is perpendicular to the top surface of the wedge, with that line passing through the angle opposite to that top surface. That is, the sound wave being measured is refracted between the two surfaces of the substrate being monitored and the wedge bottom surface.

The refracted sound is at an angle of incidence determined by the velocity of the sound in the two materials, and the line mentioned above denotes the front edge of the sound wave, in accordance with this invention.  By such a mounting, the wave form generated by the acoustic emission in the weld is  precisely reproduced in the resulting signals produced by the transducer.

Satisfactory results have been achieved in accordance  herewith, and under satisfactorily and economically attractive conditions on commercial scale operations by providing a brass wedge welded with as thin a layer as possible of SUPERDROP 3 to the substrate of interest.  The angle of the top surface of the wedge relative to the bottom engaging surface thereof is 44.25°.  The transducer sensor element mounted on the top surface of the wedge has a length of 0.75 inches (19.05mm).  The width dimension of the wedge is selected to provide an appropriate margin on either side of the sensor.  The width was arbitrarily selected to be, under these circumstances, 1.25 inches (31.75mm).  The brass is selected, as suggested above, because it has a density similar to steel.  Also, brass has the effect of loading down steel to keep the velocity of the leaky wave close to that of the shear wave in the steel.

The sensor unit is positioned along the top surface of the wedge so that the front edge thereof intercepts the line denoting the front edge of the refracted sound wave through the wedge, as discussed in more detail below.

Another aspect of the invention utilizes the property of the polarity of the transducer sensor. That is, a differential sensor is provided by separating the shear polarized sensor into two halves, and thereafter rotating one half by 180° relative to the other half. In doing so, when the sensor halves are mounted on the wedge, the response to the shear wave picked up of each half is equal and opposite to the other half. Thus, with such a procedure, a differential amplifier is utilized, and the outputs of the two parts are added by the amplifier. However, the amplifer subtracts any electrical interference which appears in common on both sets of leads. Such a pickup arrangement, therefore, has the effect of providing a much more precise output of any propagated shear wave traveling along the weld of interest.

With the foregoing and additional objects in view, this invention will now be described in more detail, and other objects and advantages will be apparent from the following description, and the appended claims.

DESCRIPTION OF THE DRAWINGS

Fig. 1 is a side elevational view illustrating the invention in the form of a wedge mounted on the weld between two structural beams;

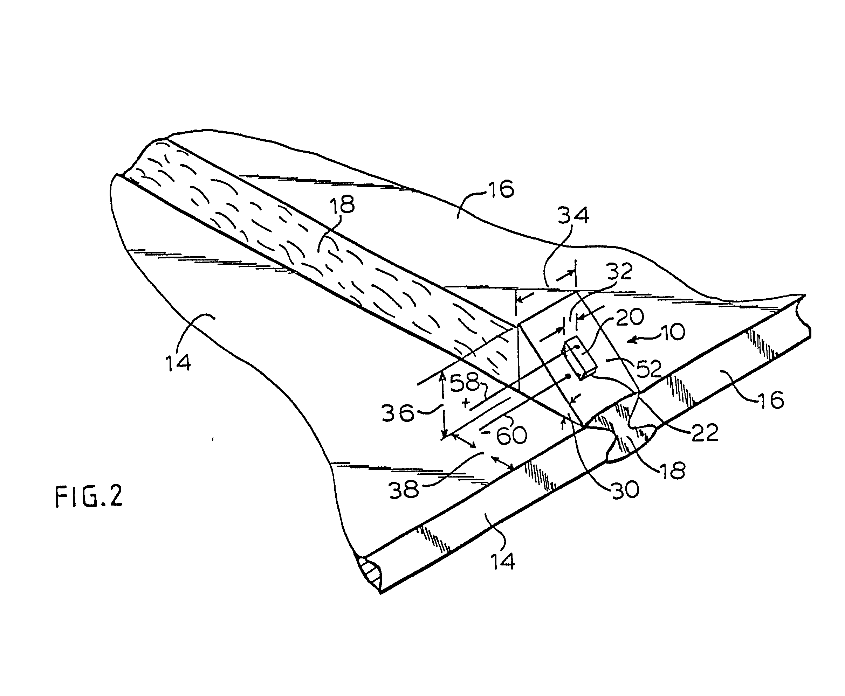

Fig. 2 is a perspective view of the wedge mounting of Fig. 1 as viewed from the right-hand side thereof;

Fig. 3 is a view in perspective of a further embodiment illustrating the invention wherein a split differential sensor is mounted on the wedge in an internal compartment for protecting the sensor from the environment.

DETAILED DESCRIPTION OF THE INVENTION

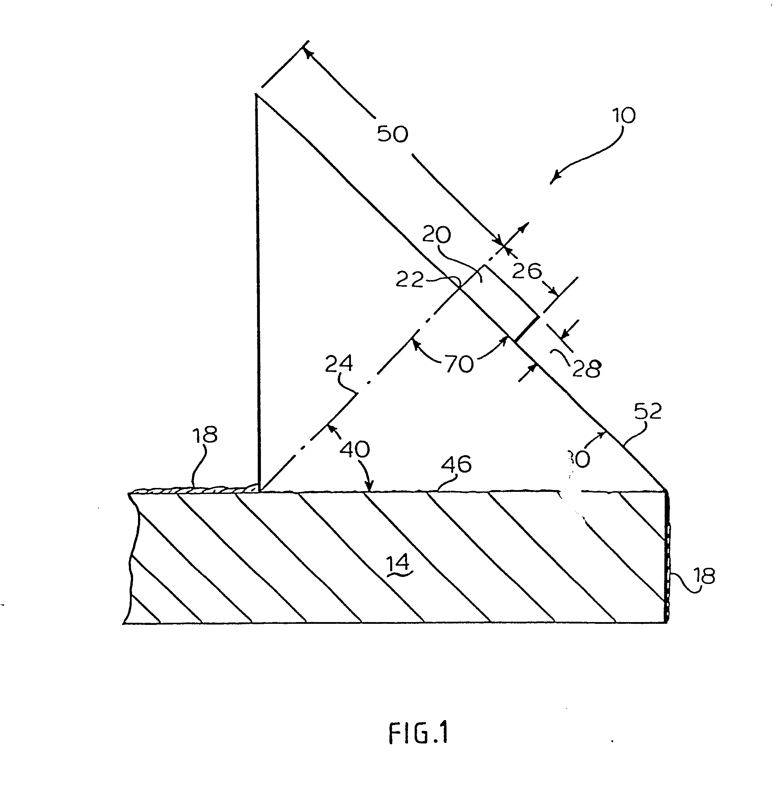

Referring to the drawings in which like reference characters refer to like parts throughout the several views thereof, Fig. 1 shows a wedge 10 mounted adjacent the weld 18 joining two structural steel beams 14, 16. The wedge 10 is configured so that the angle 30 is within the range of between about 40.41° and 44.25°, and, in this instance 44.25°. The bond 46 between the lower surface of the wedge 10 and the substrate 14, 16 is a welded bond of SUPERDROP 3 as discussed above. The wedge 10 is brass. The angle 70 of wedge 10 is 90°, and it will be appreciated, that the angle 40 is 45.75°.

The sensing element 20 is mounted on the top surface 52 of wedge 10 so that the front edge 22 thereof is adjacent line 24 where line 24 intersects the top surface 52 of wedge 10 at right angles. As discussed above, the length 26 of sensing element 20 varies inversely according to the frequency being detected.

The length 26 of sensor 20 may be, for example, 19.05mm, which relates to a frequency of somewhere between about 500-600kHz. For other representative lengths versus frequencies, one may note Table I below. It should be understood however, that these examples are being presented with the understanding that they have no limiting character on the broad disclosure of the invention as generally set forth herein and as directed to men skilled in the art.

TABLE I

| FREQUENCY | LENGTH SLIP MOUNTING | LENGTH WELDED MOUNTING |
|---|---|---|
| 100kHz | 50.96mm | 77.53mm |
| 500kHz | 10.19mm | 15.51mm |
| 1MHz | 5.10mm | 7.75mm |

As can be seen in Table I, the length of the sensor is longer at each frequency level for a weld mounting than for a slip mounting. This is because the refractive wave is longer for the weld mounting than for the slip mounting. The reason for this is not entirely understood, but it can be theorized that the more rigid secure weld mounting provides a better refracted wave.

The width 34 of wedge 10 may be any appropriate width in order to provide a proper marginal upper surface 52 for wedge 10. It may be, for example, 31.75mm, assuming a sensor length 26 of 19.05mm. The remaining dimensions 32 and 28 of sensor 20, and the height 36 and length 38 of the wedge 10 may vary and are selected for the convenience of the manufacturer, and the particular area being monitored. For example, the wedge width may influence the directionality of the sound being detected. A wide wedge allows more off direction sound.

The width 32 of the sensor will be selected to be as wide as the incident surface wave for optimum detection. That is, in the case of acoustic emissions, the source is usually a point source and the resulting surface wave actually has a circular wave front. Far enough from the source, the wave front appears planar. Thus, if the width 32 of the sensor is fairly large, it will capture as much of the wave front as possible. It should be understood, however, that while the width 32 is arbitrary so that it will be as big as possible for intercepting the circular wave front, the dimensions will be selected to still fit within a moderately sized container, for example. The height dimension 28 of the sensor 20 determines the resonant frequency. Generally, it will be chosen to be fairly high in a range where less trouble is expected due to extraneous noise. It should be emphasized, however, in this respect, that the parameters which are significant to the invention are, specifically, the angle 30 of wedge 10, the length 26 of sensor 20, the position of the front edge 22 of sensor 20 along the top surface 52 of wedge 10 to intercept line 24, and the fact that a shear wave sensor is provided with the property of differential sensing, which, as noted above, allows for elimination of a substantial proportion of signals from electrical interference.

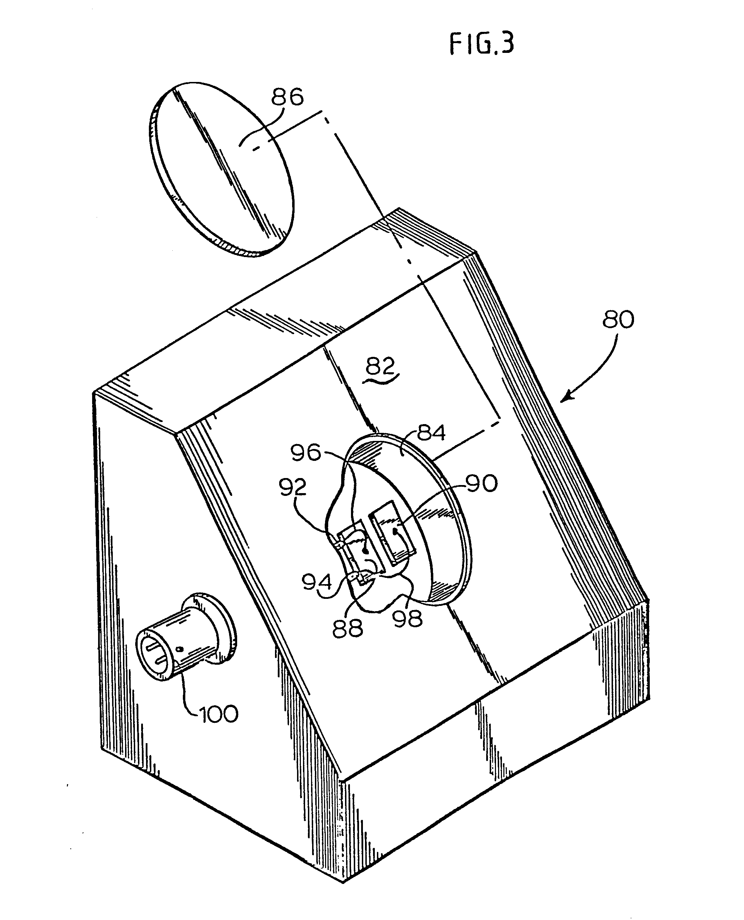

Referring now to Fig. 3, a further embodiment of sensor 88, 90 is shown mounted in a compartment 84 in the front face 82 of wedge 80. In this embodiment, the sensor is cut in half to form the dual sensor 88, 90 with the two halves rotated 180° relative to each other. The leads 96, 98 connect the sensor halves 88, 90, respectively, to poles 92, 94 which extend through receptacle 100 for connection to circuitry for reproducing the signals sensed. In this case, poles 92, 94 are connected to a differential amplifier, not shown, which amplifies the signals sensed for further use, as will be understood by practitioners-in-the-art. The differential amplifier also adds the two signals received and subtracts electrical interference received from both sensor halves which are common to the two halves. Compartment 84 is closed by a protective cooperating cap 86.

It will be appreciated, that the transucer, in accordance herewith, may be connected by leads 58, 60 to conventional circuitry so as to receive the signals produced by sensor 20 for transforming them into readable data. For example, the circuitry may connect sensor 20 to a data acquisition and retreival *ie* system. That is, the transducer may be connected to a microprocessor based system which provides information for each transducer for each event sensed by the transducer including counts, amplitude, rise time of the event, duration of the event, arrival time of the event, time of day and the value of external parameters picked up by the transducer such as temperature, load and so forth. This information can be stored on a bulk storage medium, as will be appreciated, for later play back, or alternatively, it may be passed on to another computer or minicomputer for further processing. This method of presenting complete characterization of every event detected by every transducer allows processing the arrival time and event characterization information in a way whereby any significant events may be recorded relative to the overall activities of the large structure being monitored at any one time. It will be appreciated, that a number of such transducers may be fed into such a microprocessor system so as to provide an overall picture of the condition of the structure being monitored at any one time, or the significant portion thereof being monitored.

While the methods and apparatus herein disclosed form preferred embodiments of this invention, this invention is not limited to those specific methods and apparatus, and changes can be made therein without departing from the scope of the invention which is defined in the appended claims. For example, a plurality of wedges all pre-shaped may be "stacked" in a circle with related sensors of relative reduced size to provide an omnidirectional signal from the surface wave being monitored.

CLAIMS

1. Apparatus for continuously monitoring directional surface sound waves in a substrate (14) while automatically filtering unwanted sound, the apparatus comprising

(a) a wedge-shaped support (10) for mounting on a substrate to be monitored; and

(b) a sensor (20) mounted on the top surface (52) of the wedge-shaped support; the aparatus being for use with

(c) circuit means for connection to the sensor for converting the signals produced by sensor; the apparatus being characterized in that

(d) the top surface (52) of the wedge-shaped support (10) is at an angle (30) from the bottom substrate engaging surface thereof within the range of between 40° and 45°;

(e) the upper front end surface (22) of the sensor is positioned on a line (24) passing through the top surface (52) of the wedge, the line (24) being perpendicular thereto and passing through the angle (40) of the wedge opposite the top surface; and

(f) the length (26) of the sensor being selected in inverse relationship with the frequency of the surface wave to be monitored.

2. An apparatus according to claim 1, wherein the wedge-shaped support (10) is slip-mounted on a substrate to be monitored; and the angle (30) specified at (d) is about 40.41°.

3. An apparatus according to claim 2, wherein the slip-mounting is effected with a gel, glycerine, silicon grease, or petroleum jelly.

4. An apparatus according to claim 1, wherein the wedge-shaped support (10) is weld-mounted on a substrate to be monitored; and the angle (30) specified at (d) is about 44.25°.

5. An apparatus according to claim 4, wherein the weld-mounting is effected with a cyanoacrylic pressure sensitive adhesive.

6. An apparatus according to any preceding claim, wherein the substrate to be monitored is steel and the wedge-shaped support (10) is of brass.

7. An apparatus according to claim 6, wherein the frequency of the surface sound wave to be monitored is within the range of betweeen 100kHz and 1Mhz, and the length of the sensor is within the range of between 5 mm and 80 mm.

8. An apparatus according to any preceding claim, wherein the sensor is a shear polarized sensor cut in half and the sensor halves (88, 90) are mounted on the wedge at 180° relative to each other.

9.  An apparatus according to any preceding claim, further comprising a compartment (84) mounted on the wedge-shaped support and integral therewith and a cap (86) for the compartment, the bottom surface of the compartment being the top surface of the wedge-shaped support and the sensor being mounted in said compartment.

10. A method for providing for continous monitoring of unidirectionally surface sound waves from a substrate while automatically filtering unwanted sound waves, characterized by the steps of:

(a)  providing a wedge-shaped sensor support (10) with the top surface (52) thereof being at an angle from the bottom substrate-engaging surface within the range of between 40° and 45°;

(b)  in a first mounting step, mounting the wedge-shaped support on the substrate (14) to be monitored;

(c)  selecting a sensor (20) for mounting on the wedge-shaped support, the sensor being of a length (26) related to the frequency of the sound waves to be monitored, the selecting step being carried out having regard to an inverse relationship of the length of the sensor relative to the frequency of the sound wave to be monitored;

(d)  in a second mounting step, mounting the sensor (20) onto the top surface (52) of the wedge-shaped support (10), the mounting step being carried out by placing the front edge (22) of the selected sensor so that it abuts a line (24) perpendicular to the top surface of the wedge-shaped support, the line (24) passing through the angle (40) of the wedge-shaped support opposite the top surface; and

(e)   connecting the sensor (20) to means for reading the signals produced by the sensor.

11. A method according to claim 10, wherein the first mounting step is carried out as a slip mounting; and the said angle of the support provided at (a) is about 40.41°.

12. A method according to claim 11, wherein the frequency of the sound waves to be monitored is 100kHz and the selecting step is carried out by selecting a sensor of a length of about 50.96 mm.

13. A method according to claim 10, wherein the first mounting step is carried out as a weld-mounting; and the said angle of the support provided at (a) is about 44.25°.

14. A method according to claim 13, wherein the frequency of the sound waves to be monitored is 100kHz and the selecting step is carried out by selecting a sensor of a length of about 77.36 mm.

15. A method according to any of claims 10 to 14, wherein the substrate to be monitored is steel and the support provided at (a) is of brass.

16. A method according to claim 10, wherein the frequency of the sound waves to be monitored is within the range of between 100kHz and 1MHz, and the selecting step is carried out by selecting a sensor of a length (26) within the range of between 5 mm and 80 mm.

17. A method according to any of claims 10 to 16, wherein the selecting step includes selecting a shear polarized sensor and cutting the sensor into two halves (88, 90), and the second mounting step includes positioning the sensor halves at 180° relative to each other on the top surface of the wedge-shaped support.

0080789

FIG.1

FIG.2

3|5

0080789

FIG.3

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl ³) |
|---|---|---|---|
| | --- | | G 01 M 7/00 |
| A | DE-A-3 011 783 (E. ROEDER) <br> * Whole document * | 1 | G 01 M 3/24 <br> G 01 N 29/00 <br> G 10 K 11/36 |
| | --- | | |
| P,A | US-A-4 313 070 (E.S. FISHER) <br> * Claims ; figure 3 * | 1 | |
| | --- | | |
| P,A | GB-A-2 084 731 (RAMOT UNIVERSITY AUTHORITY FOR APPLIED RESEARCH AND INDUSTRIAL DEVELOPMENT LTD.) <br> * Claims; column 1, lines 46-57; figures 1, 3 * | 1 | |
| | --- | | |
| A | US-A-3 654 500 (L.T. CLAIBORNE) <br> * Whole document * | 1 | |
| | ----- | | |

TECHNICAL FIELDS SEARCHED (Int. Cl. ³)

G 01 M 3/24
G 01 M 5/00
G 01 M 7/00
G 01 N 29/00
G 10 K 11/36

The present search report has been drawn up for all claims

| Place of search | Date of completion of the search | Examiner |
|---|---|---|
| BERLIN | 09-02-1983 | KOEHN G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82